# EUROPEAN PATENT SPECIFICATION

(11) **EP 0 521 582 B1**
(45) Date of publication and mention of the grant of the patent: **25.09.1996**
(21) Application number: 92202015.1
(22) Date of filing: 02.07.1992
(51) Int. Cl.: F16L 59/14

(54) **Insulated flowline system**
Isoliertes Leitungssystem
Tuyauterie isolée

(30) Priority: 05.07.1991 GB 9114585
(43) Date of publication of application: 07.01.1993
(73) Proprietor: SHELL INTERNATIONALE RESEARCH MAATSCHAPPIJ B.V., NL-2596 HR Den Haag (NL)
(72) Inventor: Coleman-Kammula, Seetha Maha Lakshmi, Urmston, Manchester M31 4AJ (GB); Lyle, Alan Raymond, Urmston, Manchester M31 4AJ (GB)

(56) References cited:
- EP-A- 0 336 493
- FR-A- 2 479 945
- GB-A- 2 247 507
- US-A- 3 719 601
- US-A- 3 812 886

## Description

The present invention relates to an insulated flowline system. To transport a fluid through a flowline it can be required to thermally insulate the flowline in order to prevent undesired temperature changes of the fluid in the flowline. Adequate insulation is particularly important when hot hydrocarbons are transported through flowlines which are positioned in a cold environment, for example in offshore applications when hot hydrocarbons are transported through flowlines positioned on the seabed.

It is known from US-A-3,812,886 to provide an insulating layer comprising at least one chamber which is substantially filled with an insulating composition which comprises a plurality of packed solid particles of lightweight material whereby a plurality of pores are formed between the particles in which fluid is present, according to the preamble of claim 1.

The known insulating system is designed for a cryogenic flowline and the fluid is a condensable gas, such as carbon dioxide, which condenses when the flowline is in use, thereby creating a substantial vacuum in the pore space.

A disadvantage of the known system is that as a result of the vacuum the particles and the walls of the chamber are subject to high forces so that the insulation can be easily damaged or even destroyed if also external forces are applied to the system.

In certain applications the flowlines should also be protected against damage from external forces, for example from the impact of trawler boards on subsea flowlines. Furthermore, such flowlines should be constructed and installed in a cost effective manner.

It is an object of the present invention to provide an insulated flowline system which meets these and other requirements.

In the insulated flowline system according to the invention is characterized in that the particles fill between 55% and 75% of the chamber and include a composite material comprising a polyolefin matrix material. Furthermore the fluid is substantially stagnant and substantially fills the pores between the particles.

The fluid has a high flow resistance in said chamber because of the presence of the particles, so that convection of the fluid through the chamber is substantially reduced. In this manner an insulation composition of particles and stagnant fluid is provided which has adequate insulating properties because of the substantial absence of convection of the fluid. The particles can be packed together without bonding, but if necessary they can be adhesively bonded or thermally fused together to improve the interparticulate shear strength.

In a suitable embodiment of the flowline system according to the invention, said chamber is formed by and within a carrier pipe, each flowline extending through the carrier pipe in the longitudinal direction thereof, said insulation composition filling the space between the outer surface of each flowline and the inner surface of the carrier pipe. The flowline system can comprise a single flowline inside the carrier pipe, in which case the chamber forms an annular chamber, or can comprise a plurality of flowlines. In practice the number of flowlines will be less than approximately twenty.

Alternatively, said chamber is defined within a sleeve made of a flexible material, which sleeve is wrapped around the flowline, said insulation composition being located within said sleeve. Suitably, the sleeve is wrapped helically around the flowline. The cross-section of such a wrapped sleeve can have a substantially rectangular shape with a width of between 0.08-0.12 m and a height of between 0.01-0.03 m.

To increase the weight of the flowline system, the fluid suitably comprises a liquid, which liquid can be seawater in case of an offshore flowline system.

It is known from GB-A-2247507 to insulate a subsea pipeline by means of a confined body of seawater, and in particular polymerized seawater. According to this prior art reference, however, convection in the fluid is reduced by preferably polymerizing the seawater.

The solid particles used in the insulated flowline system according to the invention have adequate insulating properties and sufficient mechanical strength and comprise a polyolefin which may be in the form of a homo- or a copolymer. The particles can be subjected to severe compressive loads during installation or during operation of the flowline system, for example when the system is reeled onto a reel, or when the system is subjected to high hydrostatic forces in an offshore environment. The filler can comprise hollow microspheres substantially alone, or in combination with other filler materials, including non-hollow filler materials such as talc, chalk, barium carbonate or chopped glass fibres.

Preferably, the polyolefin is selected from the group of polypropylene and polybutylene. Suitable copolymers are those comprising from 5 to 20 wt% of ethylene as comonomer. The homo- or copolymers may be employed in the form of blends with other polymers, such blends then comprising 1-50 wt%, preferably 10-40 wt% of other polymers such as polyamides and thermoplastic elastomers, e.g. those under the Trade Mark KRATON, and EPDM rubbers.

The flow resistance of the fluid in the pores is adequately high when particles of diameter less than 5 mm are applied, said diameter being suitably between 2 - 4 mm.

The weight of the flowline system remains sufficiently low during transportation or installation thereof when the particles have a density of less than 700 kg/m³.

Convection of the fluid through the pores between the particles is adequately reduced when the chamber is filled with particles to a volume of between 55-75% of said chamber.

There is further provided a method of creating an insulated flowline system. The method comprises the steps of claim 8.

In a preferred embodiment of the method according to the invention the chamber is filled with the insulation composition at the location of installation, whereby it is achieved that the system is relatively light during transportation thereof. Instead of filling said chamber with the insulation composition at the location of installation only, said chamber can also be filled with a first portion of said particles at the construction site, whereafter the chamber is filled with a second portion of the particles and with the fluid at the location of installation. In this manner a selected buoyancy of the system during transportation thereof through the seawater can be achieved. The invention will now be described by way of example in more detail with reference to the accompanying drawings, in which:
Fig. 1 shows schematically a flowline system which is created with the method according to the invention;
Fig. 2 shows cross-section 2-2 of Figure 1; and
Fig. 3 shows schematically a transverse section of an insulated flowline provided with electric heater cables.

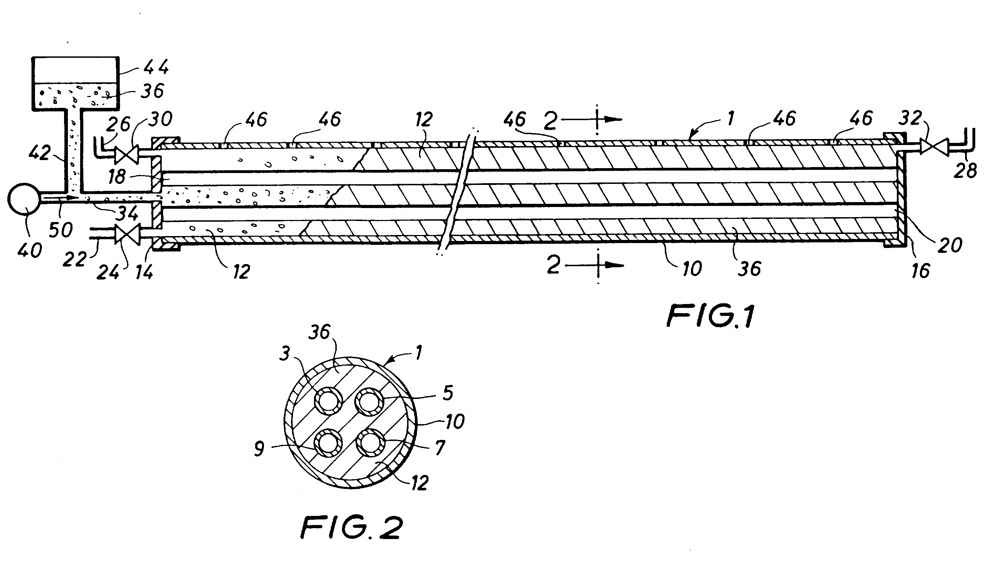

In Figs. 1 and 2 there is shown a flowline system in the form of a flowline bundle 1 for an offshore application, which bundle 1 includes four flowlines 3,5,7,9 for the transportation of hot crude oil or natural gas from a subsea wellhead to a processing facility. The flowlines 3,5,7,9 are arranged inside a carrier pipe 10 whereby a chamber 12 is present between the outer surfaces of the flowlines 3,5,7,9 and the inner surface of the carrier pipe 10. The flowline bundle 1 is to be towed at a controlled depth through the seawater from an onshore construction site to a selected offshore location where the bundle is to be lowered to the seabed.

At the construction site the flowlines 3,5,7,9 are assembled inside the carrier pipe 10 whereby spacers (not shown) are applied between the flowlines 3,5,7,9 and the carrier pipe 10 to keep the flowlines 3,5,7,9 in place. End caps 14,16 are temporarily provided at both ends 18,20 of the carrier pipe 10 to close the ends 18,20 of the carrier pipe 10 and of the flowlines 3,5,7,9. One of the end caps 14 is provided with an inlet 22 for seawater, which inlet 22 is temporarily closed by means of a valve 24. Air vent conduits 26,28 are provided at both end caps 14,16, each air vent conduit 26,28 being temporarily closed by a valve 30,32. The end cap 14 is furthermore provided with an inlet conduit 34 for inserting solid lightweight particles 36 into the chamber 12, which inlet conduit 34 is connected to a compressor 40 for blowing air into the chamber 12 and to a feed conduit 42 for feeding the particles 36 to the inlet conduit 34, the feed conduit 42 being connected to a reservoir 44 in which the particles 36 are stored. The carrier pipe 10 is at the upper side thereof provided with small holes 46 located at regular distances along its length, the holes 46 being smaller in diameter than the diameters of the particles 36. The reservoir 44 is filled with solid lightweight particles 36 made of a composite material of hollow microspheres of inorganic glass embedded in a matrix of polypropylene, which composite material is described in British patent application No. 9017203.2. Such particles typically have a compressive modulus of between 1.1-1.5 GPa at 20°C, and between 270-300 MPa at 120°C, and a compressive strength of between 30-40 MPa at 20°C, and between 8-9 MPa at 120°C. At least some of the microspheres have been treated with a reagent in the form of an organic peroxide which acts as a chain-scission agent for the polypropylene. Such particles have excellent insulating properties and are capable of withstanding high hydrostatic forces.

A first portion of the particles 36 is inserted into the chamber 12 by operating the compressor 40 which induces a stream of air 50 to flow through the inlet conduit 34 and into the chamber 12. The particles 36 are induced to flow by gravity through the feed conduit 42, and are thereby entrained in the stream of air 50. Thus, the particles 36 are blown with the air from the stream of air 50 into the chamber 12, while the air is vented through the holes 46. When the chamber 12 has been partly filled with particles 36, the compressor 40 is stopped, whereafter the inlet conduit 34 and the holes 46 in the carrier pipe 10 are closed using suitable plugs.

Thereafter the flowline bundle 1 is towed at a controlled depth through the seawater to the desired location. When the flowline bundle 1 has arrived at the selected location, a remaining second portion of the particles is inserted into the chamber in a manner similar to insertion of the first portion into the chamber. Next, the inlet conduit 34 and the holes 46 in the carrier pipe 10 are closed again, and the valves 24,30,32 are opened thereby allowing seawater to flow into the chamber 12 and to fill the pores between the particles 36. The air which is initially present in the pores is thereby vented through the vent conduits 26,28. As the seawater flows into the chamber 12 the weight of the bundle 1 gradually increases, thus promoting the descend of the bundle 1 to the seabed. When the pores are completely filled with seawater, the valves 24,30,32 are closed.

After installation of the bundle 1 on the seabed, the flowlines 3,5,7,9 are connected at their respective ends to other fluid transport facilities (not shown) which do not form part of the present invention.

Instead of applying the inlet conduit which is connected to the end cap, an elongated conduit which is axially slidable into the chamber can be applied. During filling of the chamber with particles, the elongated conduit is gradually withdrawn from the chamber during filling thereof with particles.

In an alternative installation procedure, the flowline bundle is reeled onto a reel after the particles have been inserted into the chamber between the flowlines and the carrier pipe. To protect the particles from mechanical loads due to reeling of the bundle, helical spacers are arranged between the flowline(s) and the carrier pipe, which spacers are designed to transfer compressive stresses and shear stresses from the carrier pipe to the flowline(s).

Instead of filling the chamber between the particles with seawater, the chamber can be filled with any liquid which does not cause significant deterioration to the particles or pipes and has an adequately low thermal conductivity. The chamber can also be filled with a liquid which solidifies on cooling, for example bitumen or wax, or which can react chemically to form a solid, for example polyurethane.

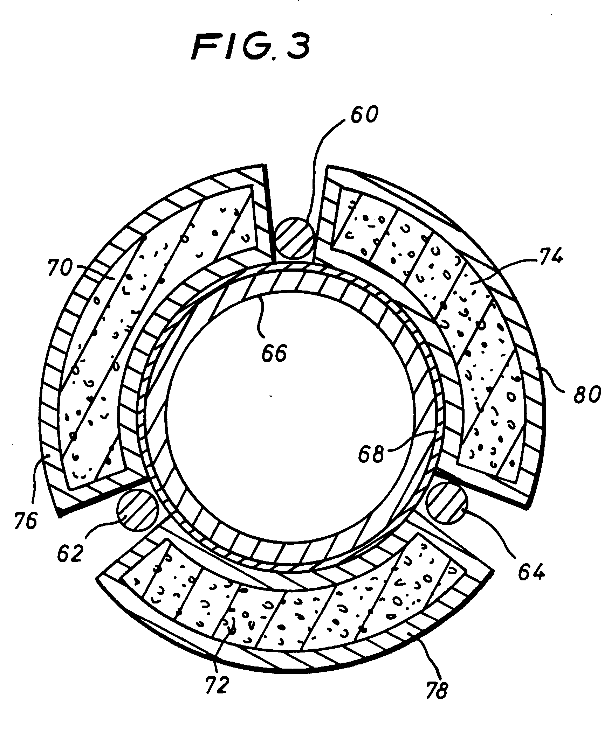

The insulated flowline system shown in Fig. 3 includes three electric cables 60,62,64 for electrically heating a flowline 66, which cables 60,62,64 extend along at least a substantial part of the length of the flowline 66. The flowline 66 is provided with an anti-corrosion coating 68 of polychloroprene and an insulation layer made of three separate chambers 70,72,74 containing an insulation composition of a plurality of packed solid particles and air present in the pores between the particles. The particles are made of a composite material of a polypropylene matrix in which hollow glass microspheres are embedded. Each chamber 70,72,74 is arranged around a part of the circumference of the flowline 66. The walls 76,78,80 of the respective chambers 70,72,74 are made of polyethylene or from any other suitable material. The chambers 70,72,74 are attached to the flowline 66 by means straps (not shown).

The invention is further illustrated in the following examples:

### Example 1

Particles made of hollow glass microspheres embedded in a matrix of polypropylene and having a diameter of 3mm were inserted into an annular chamber formed between a 0.09 m diameter steel pipe and a 0.2 m diameter outer plastic sleeve. The thus insulated pipe was mounted in a horizontal position and heat flow measurements were made on the highest and lowest points at the outside surface of the sleeve when said outside surface was maintained at 25°C and oil at 95°C flowed through the steel pipe. Heat flux values of 54 W/m² and 50 W/m² were measured from the highest and lowest points of the sleeve respectively. The relatively small difference between the measured heat fluxes showed that heat transfer by convection of air through the pores was small.

### Example 2

Eight steel flowlines of outer diameter 4.5 inch and wall thickness 0.237 inch, and six steel flowlines of outer diameter 2.375 inch and wall thickness 0.154 inch were assembled in a steel carrier pipe of outer diameter 27.5 inch and wall thickness 0.469 inch. Spherical particles having a diameter of 4 mm, a density of 600 kg/m³, and a thermal conductivity of 0.14 W/m.K, which particles are made of syntactic foam in the form of the composite material prepared with the method described in British patent application No. 9017203.2, were inserted at the construction site in the chamber between the flowlines and the carrier pipe up to 35 kg/m length. The flowline bundle was then substantially neutral buoyant, and was towed at a controlled depth through the seawater to the desired location where additional particles were inserted up to 93 kg/m length. Subsequently, the pores between the particles were flooded with seawater. The specific weight of the bundle was then 1460 kg/m³ and the overall thermal conductivity was approximately 0.17 W/m.K.

### Example 3

The same flowlines and carrier pipe as in example 1 were used. Spherical beads having a diameter of at maximum 4 mm, a density of 250 kg/m³, and a thermal conductivity of 0.06 W/m.K, which particles are made of syntactic foam in the form of hollow glass microspheres embedded in a matrix of expanded polystyrene were inserted at the construction site in the chamber between the flowlines and the carrier pipe up to 35 kg/m length. The flowline bundle was then substantially neutral buoyant, and was towed at a controlled depth through the seawater to the desired location where additional particles were inserted up to 53 kg/m length, and the pores between the particles were flooded with seawater. The specific weight of the bundle was then 1260 kg/m³ and the overall thermal conductivity was approximately 0.08 W/m.K.

## Claims

1. An insulated flowline system comprising at least one flowline and an insulation layer substantially surrounding the flowline, which layer includes at least one chamber substantially filled with an insulation composition, said insulation composition comprising a plurality of packed solid particles of lightweight material, whereby a plurality of pores are formed between the particles in which a fluid is present, characterized in that said particles fill between 55% and 75% of the chamber and include a composite material comprising a polyolefin matrix material and that said fluid is substantially stagnant and substantially fills the pores between the particles.

2. The insulated flowline system of claim 1, wherein said chamber is formed by and within a carrier pipe, each flowline extending through the carrier pipe in the longitudinal direction thereof, said insulation composition filling the space between the outer surface of each flowline and the inner surface of the carrier pipe.

3. The flowline system of claim 1, wherein said chamber is defined within a sleeve made of a flexible material, which sleeve is wrapped helically around the flowline, said insulation composition being located within said sleeve.

4. The flowline system of any one of claims 1-3, wherein said fluid comprises seawater, and the flowline system forms an offshore flowline system.

5. The flowline system of claim 1, wherein said composite material further comprises hollow glass microspheres that are embedded in the polyolefin matrix material.

6. The flowline system of claim 5, wherein said polyolefin matrix material is selected from the group of polystyrene, polypropylene and polybutylene.

7. The flowline system of any one of claims 1-6, wherein an electric cable is arranged between a first and a second of said chambers, each of said chambers being arranged around a part of the circumference of the flowline and extending in the longitudinal direction of the flowline system.

8. A method of creating an insulated flowline system, comprising assembling at least one flowline within a carrier pipe so that the flowline extends through the carrier pipe in the longitudinal direction thereof, whereby a chamber is formed between the outer surface of each flowline and the inner surface of the carrier pipe, transporting the flowline system through a body of water to a selected offshore location, substantially filling said chamber with an insulation composition comprising a plurality of packed solid particles of lightweight material, whereby a plurality of pores are formed between the particles, substantially filling said pores with a fluid and lowering the system to the seabed, whereby said particules include a composite material comprising a polyolefin matrix material and are packed such that they fill between 55% and 75% of the chamber, the fluid being substantially stagnant.

## Patentansprüche

1. Isoliertes Leitungssystem, enthaltend mindestens eine Leitung und eine die Leitung im wesentlichen umgebende Isolierschicht, die mindestens eine im wesentlichen mit einer Isolierzusammensetzung aus mehreren gepackten Feststoffteilchen aus einem leichten Material gefüllte Kammer enthält, so daß zwischen den Teilchen mehrere Poren, in denen ein Fluid vorliegt, ausgebildet werden, dadurch gekennzeichnet, daß die Teilchen 55% bis 75% der Kammer ausfüllen und einen ein Polyolefin-Matrixmaterial enthaltenden Verbundwerkstoff enthalten und daß das Fluid im wesentlichen ruhend ist und die Poren zwischen den Teilchen im wesentlichen ausfüllt.

2. Isoliertes Leitungssystem nach Anspruch 1, wobei die Kammer von und in einem Trägerrohr ausgebildet ist, wobei jede Leitung in Längsrichtung durch das Trägerrohr verläuft und die Isolierzusammensetzung den Raum zwischen der Außenseite jeder Leitung und der Innenseite des Trägerrohrs ausfüllt.

3. Leitungssystem nach Anspruch 1, wobei die Kammer in einer Hülle aus einem flexiblen Material ausgebildet ist, die spiralförmig um die Leitung gewickelt ist und in der sich die Isolierzusammensetzung befindet.

4. Leitungssystem nach einem der Ansprüche 1-3, wobei das Fluid Meerwasser darstellt und das Leitungssystem im Off-shore-Bereich eingesetzt wird.

5. Leitungssystem nach Anspruch 1, wobei der Verbundwerkstoff außerdem noch im Polyolefin-Matrixmaterial eingebettet Mikrohohlkugeln aus Glas enthält.

6. Leitungssystem nach Anspruch 5, wobei das Polyolefin aus der Gruppe Polystyrol, Polypropylen und Polybutylen ausgewählt ist.

7. Leitungssystem nach einem der Ansprüche 1-6, wobei zwischen einer ersten und einer zweiten der Kammern ein elektrisches Kabel angeordnet ist, wobei jede der Kammern um einen Teil des Umfangs der Leitung herum angeordnet ist und in Längsrichtung des Leitungssystems verläuft.

8. Verfahren zur Erzeugung eines isolierten Leitungssystems, bei dem man mindestens eine Leitung in einem Trägerrohr derart anbringt, daß die Leitung in Längsrichtung durch das Trägerrohr verläuft, wodurch eine Kammer zwischen der Außenseite jeder Leitung und der Innenseite des Trägerrohrs gebildet wird, das Leitungssystem durch Wasser zu einem ausgewählten Ort auf See transportiert, die Kammer im wesentlichen mit einer Isolierzusammensetzung aus mehreren gepackten Feststoffteilchen aus einem leichten Material füllt, so daß sich zwischen den Teilchen mehrere Poren bilden, die Poren im wesentlichen mit einem Fluid füllt und das System auf den Meeresboden absenkt, wobei die Teilchen einen ein Polyolefin-Matrixmaterial enthaltenden Verbundwerkstoff enthalten und derart eingefüllt sind, daß sie 55% bis 75% der Kammer ausfüllen, und das Fluid im wesentlichen ruhend ist.

## Revendications

1. Système de tuyauterie isolée comprenant au moins une tuyauterie et une couche d'isolation entourant substantiellement la tuyauterie, laquelle couche comprend au moins une cavité substantiellement remplie d'une composition d'isolation, ladite composition d'isolation comprenant une pluralité de particules solides tassées d'un matériau léger, une pluralité de pores étant formée entre les particules dans lesquelles un fluide est présent, caractérisé en ce que lesdites particules remplissent entre 55 % et 75 % de la cavité et incluent un matériau composite comprenant un matériau matriciel de polyoléfine, et en ce que ledit fluide est substantiellement stagnant et remplit substantiellement les pores entre les particules.

2. Système de tuyauterie isolée selon la revendication 1, caractérisé en ce que ladite cavité est formée par et au sein d'un tuyau porteur, chaque tuyauterie s'étendant à travers le tuyau porteur dans sa direction longitudinale, ladite composition d'isolation remplissant l'espace entre la surface extérieure de chaque tuyauterie et la surface interne du tuyau porteur.

3. Système de tuyauterie isolée selon la revendication 1, caractérisé en ce que ladite cavité est définie au sein d'une gaine faite d'un matériau souple, laquelle gaine est enroulée de manière hélicoïdale autour de la tuyauterie, ladite composition d'isolation étant située au sein de ladite gaine.

4. Système de tuyauterie isolée selon l'une quelconque des revendications 1 - 3, caractérisé en ce que ledit fluide comprend de l'eau de mer, et en ce que le système de tuyauterie forme un système de tuyauterie en mer.

5. Système de tuyauterie selon la revendication 1, caractérisé en ce que ledit matériau composite comprend des microsphères creuses en verre, qui sont noyées dans le matériau matriciel de polyoléfine.

6. Système de tuyauterie selon la revendication 5, caractérisé en ce que ledit matériau matriciel de polyoléfine est choisi parmi le groupe du polystyrène, du polypropylène et du polybutylène.

7. Système de tuyauterie selon l'une quelconque des revendications 1 - 6, caractérisé en ce qu'un câble électrique est arrangé entre une première et une deuxième desdites cavités, chacune desdites cavités étant arrangée autour d'une partie de la circonférence de la tuyauterie et s'étendant dans la direction longitudinale du système de tuyauterie.

8. Méthode de réalisation d'un système de tuyauterie isolée, comprenant l'assemblage d'au moins une tuyauterie au sein d'un tuyau porteur, de sorte que la tuyauterie se prolonge à travers le tuyau porteur dans sa direction longitudinale, une cavité étant formée entre la surface externe de chaque tuyauterie et la surface interne du tuyau porteur, le transport du système de tuyauterie à travers un corps d'eau vers un endroit choisi en mer, en remplissant substantiellement ladite cavité à l'aide d'une composition d'isolation comprenant une pluralité de particules solides tassées de matériau léger, une pluralité de pores étant formées entre les particules, le remplissage substantiel desdits pores à l'aide d'un fluide et l'abaissement du système sur le fond marin, lesdites particules incluant un matériau composite comprenant un matériau matriciel de polyoléfine et étant entassées de sorte qu'elles remplissent entre 55 % et 75 % de la cavité, le fluide étant substantiellement stagnant.
